# EUROPEAN PATENT APPLICATION

(11) **EP 4 125 291 A1**
(43) Date of publication of application: **01.02.2023**
(21) Application number: 20926798.8
(22) Date of filing: 01.12.2020
(51) Int. Cl.: H04W 36/08, H04W 36/38

(54) **NODE SELECTION METHOD, ELECTRONIC DEVICE, AND STORAGE MEDIUM**

(30) Priority: 23.03.2020 CN 202010207239
(71) Applicant: ZTE Corporation, Shenzhen, Guangdong 518057 (CN)
(72) Inventor: HOU, Yun, Shenzhen, Guangdong 518057 (CN)
(74) Representative: Boult Wade Tennant LLP
(86) International application number: PCT/CN2020/133142
(87) International publication number: WO 2021/189930

(57) **Abstract**

The present application discloses a node selection method, an electronic device, and a storage medium. The method comprises: a first network access node selects a second network access node based on historical second network access node information, wherein the historical second network access node information comprises respective node identifiers of N historical second network access nodes, where N is an integer greater than or equal to 1, and each of the historical second network access nodes is a second network access node that has ever successfully established a second network connection with UE.

## Description

### CROSS-REFERENCE TO RELATED APPLICATION

This application claims priority to Chinese Patent Application No. 202010207239.1, filed on March 23, 2020, the disclosure of which is incorporated herein by reference in its entirety.

### TECHNICAL FIELD

The present disclosure relates to the field of communications, particularly to a node selection method, an electronic device, and a storage medium.

### BACKGROUND

At present, under the Non-Standalone (NSA) networking architecture adopted for 5G (5th Generation Mobile Communication) network deployment, the Control Plane (CP) of the 5G New Radio (NR) network is anchored to the 4G Long Term Evolution (LTE) network. If User Equipment (UE) is to transmit data traffic through the 5G network, the UE needs to first establish a 4G network connection with the LTE node, then perform NR measurement, and report the measured signal strength and quality of the NR cell to the LTE node, so that the LTE node may select, based on the measurement report, an NR node for allocating 5G radio resources to the UE. In this way, the UE may perform data transmission through the 5G network.

If the UE is to access the 5G network again after the 5G radio resources are released, the UE needs to repeat the above-mentioned NR measurement and reporting work so that the an NR node may be re-selected. This process is cumbersome, redundant, and time-consuming.

### SUMMARY

The following is a summary of the subject matters detailed herein, which is not intended to limit the scope of the claims.

Embodiments of the present disclosure provide a node selection method, an electronic device, and a storage medium.

In one aspect, an embodiment of the present disclosure provides a node selection method, which is applicable to UE under NSA networking. The method comprises: sending historical second network access node information to a first network access node, to enable the first network access node to select a second network access node based on the historical second network access node information, wherein the historical second network access node information comprises respective node identifiers of N historical second network access nodes, where N is an integer greater than or equal to 1, and each of the historical second network access nodes is a second network access node that has ever successfully established a second network connection with the UE.

In another aspect, an embodiment of the present disclosure provides a node selection method, which is applicable to a first network access node under NSA networking. The method comprises: obtaining historical second network access node information, wherein the historical second network access node information comprises respective node identifiers of N historical second network access nodes, where N is an integer greater than or equal to 1, and each of the historical second network access nodes is a second network access node that has ever successfully established a second network connection with UE; and selecting a second network access node based on the historical second network access node information, to enable UE, which is currently to access a second network, to establish a second network connection with the selected second network access node.

In yet another aspect, an embodiment of the present disclosure provides an electronic device. The electronic device comprises: a memory for storing a program; and a processor for executing the program stored in the memory, the processor being configured to perform the above-mentioned node selection method when executing the program stored in the memory.

In yet another aspect, an embodiment of the present disclosure provides a storage medium. The storage medium stores thereon computer-executable instructions for performing the above-mentioned node selection method.

Other features and advantages of the present disclosure will be set forth in the following description, and part thereof will be apparent from the description or may be learned by implementation of the present disclosure. An objective and other advantages of the present disclosure may be realized and attained by configuration particularly indicated in the description, the claims, and the drawings.

### BRIEF DESCRIPTION OF THE DRAWINGS

The drawings are provided to assist in further understanding of the technical solutions of the present disclosure and constitute a part of the specification. The drawings are used to explain the technical solutions of the present disclosure together with the embodiments of the present disclosure and do not limit the technical solutions of the present disclosure.
FIG. 1 is a flowchart of a node selection method according to an embodiment of the present disclosure;
FIG. 2 is a flowchart of a process of sending historical second network access node information to a first network access node according to an embodiment of the present disclosure;
FIG. 3 is a flowchart of another node selection method according to an embodiment of the present disclosure;
FIG. 4 is a flowchart of yet another node selection method according to an embodiment of the present disclosure;
FIG. 5 is a flowchart of a process of obtaining the historical second network access node information according to an embodiment of the present disclosure;
FIG. 6 is a flowchart of a process of selecting a second network access node according to the historical second network access node information according to an embodiment of the present disclosure; and
FIG. 7 is a block diagram of an electronic device according to an embodiment of the present disclosure.

### DETAILED DESCRIPTION OF THE EMBODIMENTS

In order to make the purpose, technical solutions and advantages of the present disclosure more clearly understood, certain embodiments of the present disclosure will be described in detail below in conjunction with the accompanying drawings. It should be understood that the specific embodiments described herein are provided only to explain the present disclosure, but not to limit the present disclosure.

It should be noted that in the description of the embodiments of the present disclosure, "plurality" (or "multiple") means two or more. "Greater than a number", "less than a number", "exceeding a number", or the like should be understood as not including the number, whereas "a number or more", "a number or less", or the like should be understood as including the number. If "first", "second" and the like are used to name respective features in the description, they are used only to distinguish the respective features from each other, and they cannot be understood as indicating or implying relative importance of the respective features, as implicitly indicating the number of the respective features, or as implicitly indicating a sequence of the respective features.

Under the NSA networking architecture adopted in the early stage of 5G network deployment, a core network is an evolved packet core (EPC) or a new generation core (NGC)/5G core (5GC). An evolved base station (eNB) providing LTE access system services, as a master node, can establish for the UE control plane and user plane connections with the core network . However, a next generation base station (gNB) in the 5G network providing NR access system services, as an auxiliary node, can establish for the UE only a user plane connection with the core network. This means that the control plane of the 5G network is anchored to the 4G network. Thus, with the NSA networking, the UE may access the 5G network by the following steps in general:
S1: the UE establishes a 4G network connection with the LTE node;
S2: the LTE node configures the UE to measure the NR signal;
S3: the UE measures the NR signal according to the configuration and sends a measurement report to the LTE node;
S4: the LTE node selects an NR node according to the measurement report, and sends to the selected NR node a request for providing access resources;
S5: the NR node replies to the LTE node with access resource configuration;
S6: the LTE node sends the access resource configuration to the UE;
S7: the UE uses the access resource configuration to establish a 5G network connection with the NR node.

If the UE is to access the 5G network again after the 5G radio resources are released, the UE needs to repeat the above-mentioned NR measurement and reporting work so that the an NR node may be re-selected. This process is cumbersome, redundant, and time-consuming.

The embodiments of the present disclosure provide a node selection method, an electronic device, and a storage medium, which can reduce the time taken for the UE to access the 5G network.

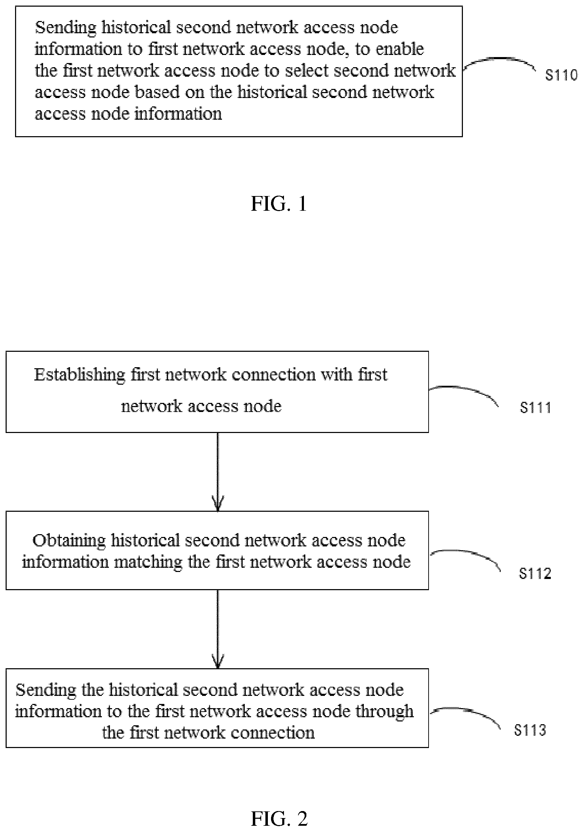

FIG. 1 shows a flowchart of a node selection method according to an embodiment of the present disclosure. The method is applicable to UE under the NSA networking. As shown in FIG. 1, the method may comprise the following step:
S110: sending historical second network access node information to a first network access node, to enable the first network access node to select a second network access node based on the historical second network access node information.

Herein, the historical second network access node information comprises respective node identifiers of N historical second network access nodes, where N is an integer greater than or equal to 1. Each of the historical second network access nodes is a second network access node that has ever successfully established a second network connection with the UE.

It should be understood that, in this embodiment of the present disclosure, the first network access node and the second network access node are respective nodes of two different systems. Specifically, the first network access node may be a base station of an LTE access system, and the second network access node may be a base station of an NR access system.

For example, as shown in FIG. 2, the sending of the historical second network access node information to the first network access node may comprise the following steps:
Sill: establishing a first network connection with the first network access node;
S112: obtaining the historical second network access node information that matches the first network access node;
S113: sending the obtained historical second network access node information to the first network access node through the first network connection.

Specifically, the UE may first establish a first network connection with the first network access node and, in a normal case, the UE may reside in a cell covered by the first network access node and maintain the first network connection with the first network access node. If the UE is to access the second network, the UE may obtain the historical second network access node information matching the first network access node to which the UE is currently connected, and send the obtained historical second network access node information to the first network access node, to enable the first network access node to select a second network access node from a plurality of historical second network access nodes within a coverage of the first network access node. Then, the selected second network access node may provide the UE with resources of the second network.

Optionally, the historical second network access node information may be stored in the UE. In implementation, a list of historical second network access nodes may be created in the UE, and respective node identifiers of the historical second network access nodes may be recorded in the list. It should be noted that the historical second network access node information may also be stored in a cloud server or other memory, which is not unnecessarily limited in the present disclosure.

Optionally, the historical second network access node information may further comprise: for each node identifier, the number of historical connection successes corresponding to the node identifier. Here, the number of historical connection successes represents the number of times a historical second network access node has successfully established a second network connection with the present UE. In implementation, for each node identifier, the number of historical connection successes may be recorded in the above-mentioned list of historical second network access nodes, in association with the node identifier.

When the historical second network access node information comprises the number of historical connection successes, the first network access node may select a second network access node based on the historical second network access node information by: for each historical second network access node, determining connection priority of the historical second network access node based on the number of historical connection successes corresponding to the node identifier of the historical second network access node; selecting the second network access node from the N historical second network access nodes based on the respective connection priorities thereof. For example, the historical second network access node information may indicate three nodes NR1, NR2 and NR3 respectively corresponding to numbers of historical connection successes of 3, 1 and 2. Then, the above three nodes may be sorted in a descending order of the respective connection priorities thereof, as follows: NR1, NR3, NR2. Based on the respective connection priorities, the first network access node may select NR1 having the highest connection priority to provide the UE with resources of the second network.

Optionally, the above-mentioned N historical second network access nodes may be N second network access nodes that have successfully established a second network connection with the present UE within a preset period of time. In general, when a user moves to a cell covered by a second network access node, the user may reside in the cell for a period of time. Thus, in order to improve the possibility the second network access node selected by the first network access node would successfully establish a second network connection with the UE currently to access the second network, the preset period of time can be set as one day from the present time, one week from the present time, or the like. Only N second network access nodes that have successfully established a second network connection with the present UE within the preset period of time from the present time are put in the list of historical second network access nodes. Of course, an unlimited time range may be also set, that is, N second network access nodes that have successfully established a second network connection with the present UE recently within an unlimited time range may be put in the list of historical second network access nodes. In implementation, a specific value of N can be set, for example, N may be set to 3.

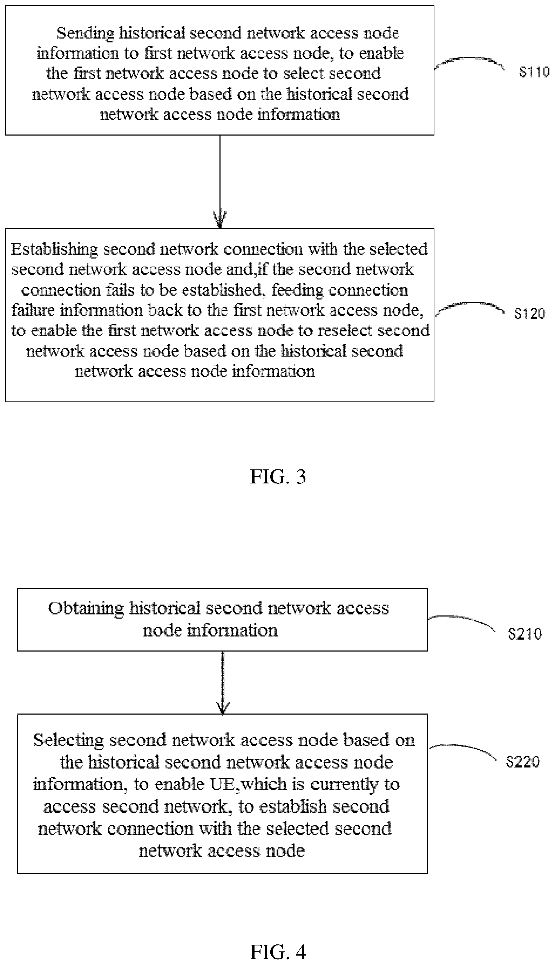

Optionally, as shown in FIG. 3, the method of this embodiment may further comprise the following step:
S120: establishing a second network connection with the selected second network access node and, if the second network connection fails to be established, feeding connection failure information back to the first network access node, to enable the first network access node to reselect a second network access node based on the historical second network access node information.

For example, upon selecting the second network access node, the first network access node may send access configuration of the selected second network access node to the UE, to enable the UE to establish a second network connection with the selected second network access node. If the establishment of the second network connection fails, the UE may feed connection failure information back to the first network access node, so that the first network access node may reselect a second network access node based on the historical second network access node information.

For example, the first network access node may reselect a second network access node based on the historical second network access node information by: selecting a second network access node having the second highest connection priority from the above-mentioned list of historical second network access nodes as a new node, so that the UE may establish a second network connection with the reselected second network access node.

FIG. 4 shows a flowchart of a node selection method according to an embodiment of the present disclosure. The method is applicable to a first network access node under the NSA networking. As shown in FIG. 4, the method may comprise the following steps:
S210: obtaining historical second network access node information;
S220: selecting a second network access node based on the historical second network access node information, to enable UE, which is currently to access a second network, to establish a second network connection with the selected second network access node.

Herein, the historical second network access node information comprises respective node identifiers of N historical second network access nodes, where N is an integer greater than or equal to 1. Each of the historical second network access nodes is a second network access node that has ever successfully established a second network connection with the UE.

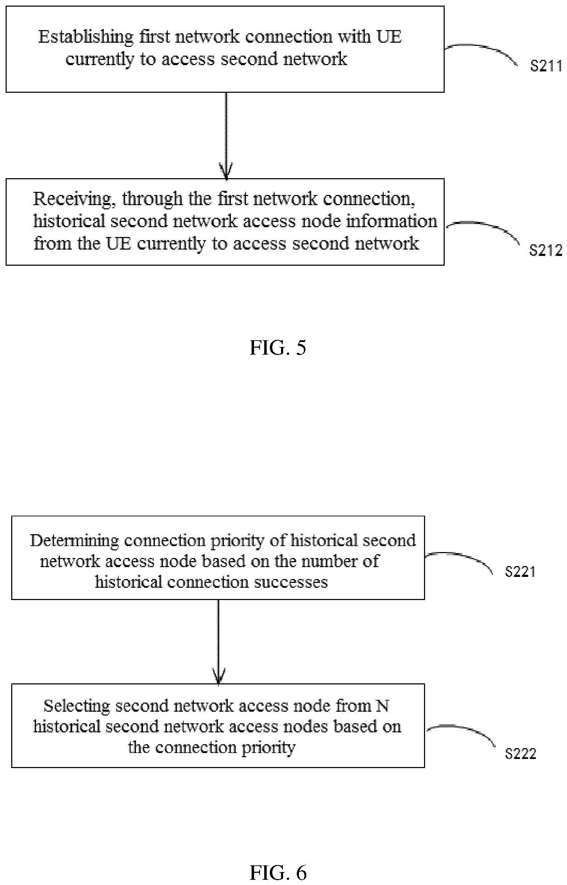

In a possible implementation, the historical second network access node information may be stored in the UE currently to access the second network. Based on this, as shown in FIG. 5, the step S210 of obtaining the historical second network access node information may comprise, but not limited to, the following sub-steps:
S211: establishing a first network connection with the UE currently to access the second network;
S212: receiving, through the first network connection, the historical second network access node information from the UE currently to access the second network.

For example, the first network access node may receive, from a UE currently to access the second network, the historical second network access node information comprising respective node identifiers of N historical second network access nodes. Here, each of the historical second network access nodes represents a second network access node that has ever successfully established a second network connection with the UE currently to access the second network.

Optionally, the historical second network access node information received by the first network access node from the UE currently to access the second network may further comprise: for each node identifier, the number of historical connection successes corresponding to the node identifier. Here, the number of historical connection successes represents the number of times a historical second network access node has successfully established a second network connection with the UE currently to access the second network.

In another possible embodiment, the historical second network access node information may be stored in the first network access node. Based on this, the step S210 of obtaining the historical second network access node information may comprise: the first network access node obtaining the historical second network access node information locally.

For example, the historical second network access node information obtained by the first network access node locally may comprise respective node identifiers of N historical second network access nodes.

For example, each of the historical second network access nodes is a second network access node that has ever successfully established a second network connection with UE which is not limited to the UE currently to access the second network but may be another UE. In addition, in this embodiment, the historical second network access node information may further comprise: for each node identifier, the number of historical connection successes corresponding to the node identifier. Here, the number of historical connection successes represents the number of times a historical second network access node has successfully established a second network connection with UE which is not limited to the UE currently to access the second network but may be another UE.

Optionally, each of the historical second network access nodes may be a second network access node that has ever successfully established a second network connection with the UE currently to access the second network. That is, only the second network access node that has ever successfully established the second network connection with the UE currently to access the second network is taken as the historical second network access node for selection by the first network access node.

Optionally, the above-mentioned N historical second network access nodes may be N second network access nodes that have successfully established a second network connection with UE or the UE currently to access the second network within a preset period of time. For example, in order to improve the possibility the second network access node selected by the first network access node would successfully establish a second network connection with the UE currently to access the second network, the preset period of time can be set as one day from the present time, one week from the present time, or the like. Of course, an unlimited time range may be also set, that is, N second network access nodes that have successfully established, recently within an unlimited time range, a second network connection with UE or the UE currently to access the second network are taken as the historical second network access nodes. In implementation, a specific value of N can be set, for example, N may be set to 3.

As shown in FIG. 6, when the historical second network access node information comprises the number of historical connection successes, the step S220 of selecting the second network access node based on the historical second network access node information may comprise, but not limited to, the following sub-steps:
S221: for each historical second network access node, determining connection priority of the historical second network access node based on the number of historical connection successes corresponding to the node identifier of the historical second network access node;
S222: selecting the second network access node from the N historical second network access nodes based on the respective connection priorities thereof.

For example, the historical second network access node information obtained by the first network access node may indicate three nodes NR1, NR2 and NR3 respectively corresponding to numbers of historical connection successes of 3, 1 and 2. Then, the above three nodes may be sorted in a descending order of the respective connection priorities thereof, as follows: NR1, NR3, NR2. Based on the respective connection priorities, the first network access node may select NR1 having the highest connection priority to provide the UE with resources of the second network.

Upon receiving connection failure information fed back by the UE currently to access the second network, the first network access node may reselect a second network access node based on the historical second network access node information. For example, NR3 having the second highest connection priority may be reselected to provide the UE with resources of the second network.

The node selection method according to at least one embodiment of the present disclosure will be further described below by specific examples.

### Example 1:

A list of historical second network access nodes, as shown in Table 1, is stored in UE. The list is used to record the historical second network access nodes that have ever successfully established a second network connection with the UE.

**Table 1**

| First network access node | Historical second network access node | Number of historical connection successes |
|---|---|---|
| LTE1 | NR1 | 3 |
| LTE1 | NR2 | 1 |
| LTE1 | NR3 | 2 |
| LTE2 | NR4 | 3 |
| LTE2 | NR5 | 1 |

For example, the UE may access a second network (i.e. the 5G network) by the following steps:
S11: the UE establishes a first network connection with a first network access node (assuming LTE1), where the first network connection is a 4G network connection;
S12: if the UE needs to access the second network (i.e. the 5G network), the UE obtains the historical second network access node information matching the LTE1 node and sends it to the LTE1 node, where the historical second network access node information matching the LTE1 node comprises respective identifiers of three nodes NR1, NR2 and NR3, and the numbers of historical connection successes of 3, 1, and 2 respectively corresponding to the three node identifiers;
S13: the LTE1 node selects a second network access node based on the historical second network access node information from the UE, more specifically, the LTE1 node may determine connection priority of each of NR1, NR2 and NR3 based on the corresponding number of historical connection successes, for example, the above three nodes may be sorted in a descending order of the respective connection priorities thereof, as follows: NR1, NR3, NR2; then, the LTE1 node may select NR1 as the second network access node based on the connection priority, and send to the NR1 node a request for providing access resources;
S14: the NR1 node replies to the LTE1 node with access resource configuration;
S15: the LTE1 node sends the access resource configuration to the UE;
S16: the UE uses the access resource configuration to establish a 5G network connection with the NR1 node.

### Example 2:

A list of historical second network access nodes, as shown in Table 2, is stored in an LTE node. The list is used to record UE, which has ever established a first network connection with the LTE node, and the historical second network access nodes corresponding to the UE. Here, each of the historical second network access nodes is an NR node that has recently successfully established a 5G network connection with the corresponding UE through this LTE node.

**Table 2**

| UE | Historical second network access node |
|---|---|
| UE1 | NR1, NR3 |
| UE2 | NR2, NR4 |
| UE3 | NR1, NR2 |

For example, UE1 may access the 5G network by the following steps:
S21: UE1 establishes a 4G network connection with the LTE node;
S22: upon receiving a request for accessing the 5G network from UE1, the LTE node obtains the historical second network access node information (indicating NR1 and NR3) matching the UE1 node;
S23: the LTE node selects a second network access node based on the obtained historical second network access node information, i.e., selecting one node from NR1 and NR3; assuming that NR1 is selected as the second network access node, then the LTE node sends to the NR1 node a request for providing access resources;
S24: the NR1 node replies to the LTE node with access resource configuration;
S25: the LTE node sends the access resource configuration to UE1;
S26: UE1 uses the access resource configuration to establish a 5G network connection with the NR1 node.

### Example 3:

A list of historical second network access nodes, as shown in Table 3, is stored in an LTE node. The list is used to record the historical second network access nodes and the numbers of historical connection successes respectively corresponding thereto. Here, each of the historical second network access nodes is an NR nodes that has recently successfully established a 5G network connection with UE (not limited to one UE) through this LTE node.

**Table 3**

| Historical second network access node | Number of historical connection successes |
|---|---|
| NR1 | 3 |
| NR2 | 1 |
| NR3 | 2 |

For example, UE may access the 5G network by the following steps:
S31: the UE establishes a 4G network connection with the LTE node;
S32: upon receiving a request for accessing the 5G network from the UE, the LTE node obtains the historical second network access node information;
S33: the LTE node selects a second network access node based on the obtained historical second network access node information, i.e., selecting one node from NR1, NR2, and NR3, more specifically, the LTE node may determine connection priority of each of NR1, NR2 and NR3 based on the corresponding number of historical connection successes, for example, the above three nodes may be sorted in a descending order of the respective connection priorities thereof, as follows: NR1, NR3, NR2; then, the LTE node may select NR1 as the second network access node based on the connection priority, and send to the NR1 node a request for providing access resources;
S34: the NR1 node replies to the LTE node with access resource configuration;
S35: the LTE node sends the access resource configuration to the UE;
S36: the UE uses the access resource configuration to establish a 5G network connection with the NR1 node.

Compared with the prior art, the node selection method according to at least one embodiment of the present disclosure has the following advantages:

With the technical solution of an embodiments of the present disclosure, the first network access node may select a second network access node based on the historical second network access node information, with no wait for the cell signal quality measurement and reporting by the UE. Thus, the efficiency of selecting the second network access node by the first network access node can be effectively improved, thereby saving the time taken for the UE to access the second network.

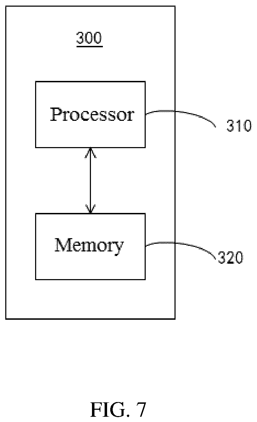

FIG. 7 shows an electronic device 300 according to an embodiment of the present disclosure. As shown in FIG. 7, the electronic device 300 may comprise, but not limited to,:
a memory 320 for storing a program;
a processor 310 for executing the program stored in the memory 320, the processor 310 performing the above-described node selection method when executing the program stored in the memory 320.

The processor 310 can be connected to the memory 320 by a bus or other means.

As a non-transitory computer-readable storage medium, the memory 320 can be used to store a non-transitory software program and a non-transitory computer-executable program, such as a program for the node selection method according to an embodiment of the present disclosure. The processor 310 may implement the above-described node selection method by running the non-transitory software program and instructions stored in the memory 320.

The memory 320 may comprise a program storage area and a data storage area. The program area storage may store an operating system and an application program required for at least one function, and the data storage area may store data for performing the above-mentioned node selection method. In addition, the memory 320 may comprise a high-speed random access memory, and may further comprise a non-transitory memory, such as at least one of a magnetic disk storage device, a flash memory device, or an other non-transitory solid-state storage device. In some embodiments, the memory 320 may optionally comprise remote memories from the processor 310. These remote memories may be connected to the processor 310 through a network. Examples of the network comprise, but not limited to, an internet, an intranet, a local area network, a mobile communication network, and combination thereof.

The non-transitory software program and instructions required for implementation of the above node selection method are stored in the memory 320. When the software program and instructions are executed by one or more processors 310, the above node selection method may be performed. For example, the step S110 shown in FIG. 1, the steps S111 to S113 shown in FIG. 2, the steps S110 and S120 shown in FIG. 3, the steps S210 and S220 shown in FIG. 4, the steps S211 to S212 shown in FIG. 5, or the steps S221 to S222 shown in FIG. 6 may be performed.

An embodiment of the present disclosure further provides a storage medium storing computer-executable instructions for performing the above node selection method.

In an embodiment, the storage medium stores computer-executable instructions that can be executed by one or more control processors, for example, by the processor 310 in the above electronic device 300, to enable the one or more processors 310 to perform the above node selection method, for example, the step S110 shown in FIG. 1, the steps S111 to S113 shown in FIG. 2, the steps S110 and S120 shown in FIG. 3, the steps S210 and S220 shown in FIG. 4, the steps S211 to S212 shown in FIG. 5, or the steps S221 to S222 shown in FIG. 6.

The above embodiments are only illustrative, where units described as separate components may or may not be physically separate, i.e., they may be disposed at one position or may be distributed over multiple network units. A part or all of the modules therein may be selected to implement the solution of embodiments of the present disclosure according to actual requirements.

Those skilled in the art may understand that all or part of the steps and systems in the methods disclosed above can be implemented in software, firmware, hardware, or appropriate combination thereof. A part or all of physical components may be implemented as software executable by a processor, such as a central processing unit, a digital signal processor, or a microprocessor, or as hardware, or as an integrated circuit, such as an application-specific integrated circuit. Such software may be distributed on a computer-readable medium which may comprise a computer storage medium (or a non-transitory medium) and a communication medium (or a transitory medium). As well known to those skill in the art, the term "computer storage medium" represents a volatile or nonvolatile, removable or non-removable medium implemented in any method or technology for storing information (such as computer readable instructions, data structures, program modules, or other data). A computer storage medium may comprise, but not limited to, a random access memory (RAM), a read-only memory (ROM), an electrically erasable programmable read-only memory (EEPROM), a flash memory, or another memory, a compact disc read-only memory (CD-ROM), a digital versatile disc (DVD) or other optical disk storage, a magnetic cartridge, a magnetic tape, a magnetic disk storage or other magnetic storage, or any other medium that can be used to store desired information and can be accessed by a computer. In addition, as well known to those skilled in the art, a communication medium typically may comprise computer readable instructions, data structures, program modules, or other data in a modulated data signal such as a carrier wave or other transport mechanism, and may comprise any information delivery medium.

Some embodiments of the present disclosure are specifically described above, but the present disclosure is not limited thereto. Those skilled in the art can make various equivalent modifications or substitutions under shared conditions that do not depart from the spirit of the present disclosure. Such equivalent modifications or substitutions fall in the scope as defined by the claims of the present disclosure.

## Claims

1. A node selection method, applicable to user equipment, UE, under Non-Standalone, NSA, networking, **characterized in that** the method comprises:
sending historical second network access node information to a first network access node, to enable the first network access node to select a second network access node based on the historical second network access node information,
wherein the historical second network access node information comprises respective node identifiers of N historical second network access nodes, where N is an integer greater than or equal to 1, and each of the historical second network access nodes is a second network access node that has ever successfully established a second network connection with the UE.

2. The method according to claim 1, **characterized in that** the sending of the historical second network access node information to the first network access node comprises:
establishing a first network connection with the first network access node;
obtaining historical second network access node information matching the first network access node; and
sending the obtained historical second network access node information to the first network access node through the first network connection.

3. The method according to claim 1, **characterized in that** the historical second network access node information further comprises: the number of historical connection successes corresponding to the node identifier.

4. The method according to claim 1, **characterized in that** each of the N historical second network access nodes is a second network access node that has ever successfully established a second network connection with the UE within a preset period of time.

5. The method according to claim 1, **characterized by** further comprising:
establishing a second network connection with the selected second network access node; when the second network connection fails to be established, feeding connection failure information back to the first network access node, to enable the first network access node to reselect a second network access node based on the historical second network access node information.

6. The method according to any one of claims 1 to 5, **characterized in that** the historical second network access node information is stored in the UE.

7. A node selection method, applicable to a first network access node under NSA networking, **characterized in that** the method comprises:
obtaining historical second network access node information, wherein the historical second network access node information comprises respective node identifiers of N historical second network access nodes, where N is an integer greater than or equal to 1, and each of the historical second network access nodes is a second network access node that has ever successfully established a second network connection with user equipment, UE; and
selecting a second network access node based on the historical second network access node information, to enable UE, which is currently to access a second network, to establish a second network connection with the selected second network access node.

8. The method according to claim 7, **characterized in that**:
the historical second network access node information further comprises: the number of historical connection successes corresponding to the node identifier; and
the selecting of the second network access node based on the historical second network access node information comprises:
determining connection priority of the historical second network access node based on the number of historical connection successes; and
selecting the second network access node from the N historical second network access nodes based on the connection priority.

9. The method according to claim 7 or 8, **characterized in that** each of the N historical second network access nodes is a second network access node that has ever successfully established a second network connection with UE within a preset period of time.

10. The method according to claim 7 or 8, **characterized in that** each of the historical second network access nodes is a second network access node that has ever successfully established a second network connection with the UE currently to access the second network.

11. The method according to claim 7 or 8, **characterized by** further comprising:
upon receiving connection failure information fed back by the UE currently to access the second network, reselecting a second network access node based on the historical second network access node information.

12. The method according to claim 7 or 8, **characterized in that**:
the historical second network access node information is stored in the UE currently to access the second network; and
the obtaining of the historical second network access node information comprises:
establishing a first network connection with the UE currently to access the second network; and
receiving, through the first network connection, the historical second network access node information from the UE currently to access the second network.

13. The method according to claim 7 or 8, **characterized in that**:
the historical second network access node information is stored in the first network access node; and
the obtaining of the historical second network access node information comprises:
the first network access node locally obtaining the historical second network access node information.

14. An electronic device, **characterized by** comprising:
a memory for storing a program; and
a processor for executing the program stored in the memory, the processor being configured to perform the method according to any of claims 1 to 13 when executing the program stored in the memory.

15. A storage medium, **characterized in that** the storage medium stores thereon computer-executable instructions for performing the method according to any of claims 1 to 13.
